# EUROPÄISCHE PATENTSCHRIFT

(11) **EP 2 325 064 B1**
(45) Veröffentlichungstag und Bekanntmachung des Hinweises auf die Patenterteilung: **17.07.2013**
(21) Anmeldenummer: 10013610.0
(22) Anmeldetag: 13.10.2010
(51) Int. Cl.: B60W 30/12, B62D 1/28, B62D 15/02

(54) **Verfahren zur Spurführung eines Fahrzeugs, insbesondere eines Nutzfahrzeuges, sowie Spurführungssystem**
Lane guidance method for a vehicle, in particular for a commercial vehicle, and lane guidance system
Procédé de guidage de voie d'un véhicule, notamment d'un véhicule utilitaire, et système de guidage

(30) Priorität: 18.11.2009 DE 102009053748
(43) Veröffentlichungstag der Anmeldung: 25.05.2011
(73) Patentinhaber: MAN Truck & Bus AG, 80995 München (DE)
(72) Erfinder: Schwertberger, Walter, 82278 Althegnenberg (DE); Brummer, Markus, 85301 Schweitenkirschen (DE); Heyes, Daniel, 81247 München (DE); Resch, Christoph, 80637 München (DE)

(56) Entgegenhaltungen:
- DE-A1-102004 027 586
- DE-A1-102004 044 334
- DE-A1-102007 022 655
- DE-A1-102007 045 962

## Beschreibung

Die Erfindung betrifft ein Verfahren zur Spurführung eines Fahrzeugs, insbesondere eines Nutzfahrzeuges, nach dem Oberbegriff des Anspruchs 1. Ferner betrifft die Erfindung ein Spurführungssystem.

Aus dem Stand der Technik sind bereits Spurführungssysteme bekannt, die ein Fahrzeug durch kontinuierliche Lenkeingriffe innerhalb der Fahrspur halten. Dabei kann die laterale Position innerhalb der Fahrspur an den Straßenverlauf oder an den Umgebungsverkehr angepasst werden.

Beispielsweise ist aus der gattungsbildenden DE 130 16 413 A1 ein Verfahren und eine Vorrichtung zur Spurführung eines Fahrzeugs bekannt, bei dem seitliche Spurbegrenzungsmarkierungen detektiert und zur Korrektur der Bewegungsrichtung des Fahrzeugs ausgewertet werden. Konkret wird hier zur Korrektur der Fahrzeugbewegungsrichtung innerhalb der markierten Fahrspur an wenigstens einem der Fahrzeugräder ein Bremseingriff durchgeführt.

Auf stark befahrenen Straßen stellt man darüberhinaus häufig Beschädigungen der Fahrbahnoberfläche durch sogenannte Spurrillen fest. Diese Schäden treten zum Beispiel auf Autobahnen, insbesondere auf der rechten Fahrspur, auf und werden dort vor allem von schweren Lastkraftwagen verursacht. In Verbindung mit den zuvor beschriebenen herkömmlichen Spurführungssystemen, welche eine Soll-Trajektorie, entlang der das Fahrzeug in einer Fahrspur bewegt wird, vorgeben, kann es jedoch aufgrund der Spurrillen dazu kommen, dass die von dem Spurführungssystem vorgegebene kontinuierliche Spurführung gegen den durch die Spurrillen hervorgerufenen Spurführungseffekt arbeitet. Dies führt zu einem permanenten, stark korrigierenden Eingriff des Spurführungssystems sowie zu einem wiederholten Aufbauen von hohen Seitenkräften am Reifen, was wiederum einen erhöhten Reifenverschleiß zur Folge hat.

In Verbindung mit derartigen Spurrillen ist es aus der DE 10 2006 061 425 A1 bereits bekannt, Fahrzeuge, insbesondere Nutzfahrzeuge, mittels einer aktiven Spurführung um ein solches Maß gegenüber der als Hauptspur bezeichneten Soll-Trajektorie zu versetzen, dass das Fahrzeug neben den Spurrillen geführt wird, um die Vertiefung bereits vorhandener Spurrillen zu vermeiden, ja vielmehr sogar ein Zurückwalken von Spurrillenflanken in die Ebene zu bewirken. Eine derartige Spurführung verschlechtert das zuvor als nachteilig geschilderte Regelverhalten nochmals erheblich und führt zu einem dauernden Regeleingriff sowie zu einer sehr unruhigen Fahrweise, die vom Fahrer als unangenehm empfunden wird. Zudem ergibt sich mit einer derartigen Spurführung ein erheblicher Reifenverschleiß.

Aus der DE 10 2007 022 655 A1 ist ein Lenksystem für ein Kraftfahrzeug bekannt, das so ausgebildet ist, dass es das Kraftfahrzeug in Abhängigkeit einer, eine Fahrspur des Kraftfahrzeugs begleitenden Leiteinrichtung lenkt. Dabei ist ein Lenkmomentensensor zur Erfassung der von der Leiteinrichtung auf ein zu lenkendes Rad übertragenen Lenkmomentes vorgesehen. Ferner ist eine Rechner-/Steuerungseinrichtung vorgesehen, die einerseits mit einer Anzeigeeinrichtung und/oder mit einer auf die Lenkung einwirkenden Stelleinrichtung und andererseits mit dem Lenkmomentensensor verbunden ist. Die Rechner-/Steuerungseinrichtung ist so ausgebildet, dass sie die Anzeigeeinrichtung und/oder die Stelleinrichtung in Abhängigkeit des vom Lenkmomentensensor erfassten und von der Leiteinrichtung auf das zu lenkende Rad übertragenen Lenkmomentes betätigt. Eine spurrillenbezogene Fahrzeugführung ist hier nicht vorgesehen.

Demgegenüber ist es Aufgabe der vorliegenden Erfindung, ein Verfahren zur Spurführung eines Fahrzeugs, insbesondere eines Nutzfahrzeuges, sowie ein Spurführungssystem zu schaffen, mittels dem die spurrilleninduzierten Störungen auf das Fahrzeug minimiert werden können, mittels dem der Reifenverschleiß vermindert werden kann und mittels dem weiter auch ein angenehmeres Fahrverhalten erzielt werden kann.

Die Aufgabe wird bezüglich des Verfahrens gelöst mit den Merkmalen des Patentanspruches 1. Bezüglich des Spurführungssystems wird diese Aufgabe gelöst mit den Merkmalen des Anspruchs 8. Vorteilhafte Ausgestaltungen sind jeweils Gegenstand der darauf rückbezogenen Unteransprüche.

Gemäß Anspruch 1 ist ein Verfahren zur Spurführung eines Fahrzeugs, insbesondere eines Nutzfahrzeuges, vorgesehen, das mit einem Spurführungssystem zur aktiven Spurführung ausgerüstet ist, das in Abhängigkeit von erfassten Fahrbahnparametern eine Soll-Trajektorie vorgibt, entlang der das Fahrzeug in einer Fahrspur bewegt wird. Erfindungsgemäß ermittelt und/oder erfasst das Spurführungssystem für die jeweils vorgegebene Fahrspur wenigstens einen definierten Spurrillenparameter als Spurrillen-Istwert und vergleicht diesen mit wenigstens einem entsprechend vorgegebenen Spurrillen-Sollwert dergestalt, dass bei einer definierten Abweichung des wenigstens einen Spurrillen-Istwertes vom zugeordneten Spurrillen-Sollwert die Soll-Trajektorie so abgeändert wird, dass die Räder des Fahrzeuges im Wesentlichen innerhalb der Spurrillen der entsprechenden Fahrspur geführt werden.

Damit wird eine Spurführung erzielt, mit der im Wesentlichen der laterale Versatz eines automatisch quergeführten Fahrzeuges in der Art variiert werden kann, dass das Fahrzeug möglichst wenig von den jeweiligen Spurrillen angeregt wird. Mit der erfindungsgemäßen Lösung können damit gegenüber einem konventionellen Querführungssystem die spurrilleninduzierten Störungen auf das Fahrzeug minimiert werden, was zu einem vom Fahrer als wesentlich angenehmer empfundenen Fahrverhalten des Fahrzeugs führt. Darüberhinaus vermindert sich mit der erfindungsgemäßen Lösung auch der Reifenverschleiß erheblich. Zudem lässt sich mit der erfindungsgemäßen Lösung auch der Kraftstoffverbrauch aufgrund der geringeren Lenkaktivität und des geringeren Pendelns des Fahrzeugs verringern. Und schließlich lässt sich mit der erfindungsgemäßen Lösung auch die Regelgüte des Querführungssystems insgesamt wesentlich verbessern.

An dieser Stelle sei ausdrücklich angemerkt, dass die erfindungsgemäße Lösung nicht nur bei klassischen Spurrillen nutzbringend eingesetzt werden kann, sondern auch bei beliebigen, in Straßenlängsrichtung verlaufenden Straßenunebenheiten oder dort eingebrachten Führungsrinnen.

Gemäß einer besonders bevorzugten Verfahrensführung ist vorgesehen, dass das Spurführungssystem wenigstens eine Sensoreinrichtung aufweist, mittels der aktuelle fahrdynamische Parameter und/oder Fahrwerksparameter erfasst werden, die wenigstens einen Spurrillen-Istwert zur Verfügung stellen. Dieser wenigstens eine Spurrillen-Istwert wird mit einem entsprechenden, im Spurführungssystem vorhandenen, insbesondere dort abgelegten, Fahrdynamik- und/oder Fahrwerkparameter-Sollwert als Spurrillen-Sollwert verglichen, so dass bei einer ein definiertes Maß überschreitenden Abweichung des Spurrillen-Istwertes vom entsprechend zugeordneten Spurrillen-Sollwert die Soll-Trajektorie in vorgegebenen Maße spurrillenangepasst abgeändert wird. Grundsätzlich können dabei bei mehreren vorhandenen Fahrdynamik- und/oder Fahrwerksparametern als Spurrillen-Istwerte auch Istwert-Bewertungen vorgenommen werden, zum Beispiel dahingehend, dass die Soll-Trajektorie nur dann abgeändert wird, wenn ein bestimmter Teil der erfassten Spurrillen-Istwerte von den entsprechend zugeordneten Spurrillen-Sollwerten abweicht und/oder in einem definierten Maße abweicht. Mit einer derartigen Maßnahme lässt sich die Flexibilität des Systems nochmals wesentlich erhöhen.

Als Fahrdynamik- und/oder Fahrwerksparameter kommen insbesondere Lenkparameter und/oder Radführungsparameter und/oder Bremsparameter und/oder Geschwindigkeitsparameter und/oder Beschleunigungsparameter und/oder das Wankverhalten und/oder das Nickverhalten und/oder das Gierverhalten als Spurrillen-Istwerte in Frage, die mit entsprechenden Spurrillen-Sollwerten verglichen werden. Besonders vorteilhaft hat es sich erwiesen, dass als Spurrillen-Istwert wenigstens der Lenkwinkel und/oder eine Radrückstellkraft erfasst und mit einem entsprechend Spurrillen-Sollwert verglichen wird, da der Lenkwinkel beziehungsweise die Radrückstellkräfte regelmäßig den besten Rückschluss auf die Beschaffenheit der Spurrillen liefern.

Neben den fahrzeugseitigen, fahrdynamischen beziehungsweise fahrwerksseitigen Parametern, mittels denen auf eine Spurrillenbeschaffenheit geschlossen wird, kann alternativ oder zusätzlich gemäß einer weiteren erfindungsgemäßen Ausführungsvariante vorgesehen sein, dass der Spurrillenverlauf und/oder die Spurrillenausgestaltung mittels einer Sensor- und/oder Kamera- und/oder Scannereinrichtung erfasst und/oder abgetastet sowie als Spurrillen-Istwert mit einem entsprechenden, im Spurführungssystem vorhandenen, insbesondere dort abgelegten, Spurrillenverlauf- und/oder Spurrillenausgestaltungs-Sollwert als Spurrillen-Sollwert verglichen werden. Analog zu den zuvor geschilderten Maßnahmen wird dann auch hier wieder bei einer, ein definiertes Maß überschreitenden Abweichung des oder wenigstens eines Teils der ermittelten Spurrillen-Istwerte vom entsprechend zugeordneten Spurrillen-Sollwert, die Soll-Trajektorie entsprechend spurrillenangepasst abgeändert. Bei einer derartigen Verfahrensführung wird somit unabhängig von den fahrdynamischen beziehungsweise fahrwerksseitigen Parametern eine Spurrillenbewertung vorgenommen und entschieden, ob die vorausliegenden Spurrillen so beschaffen sind, dass die Soll-Trajektorie so abgeändert wird, dass das Fahrzeug zur Erzielung der zuvor genannten erfindungsgemäßen Vorteile im Wesentlichen in den Spurrillen geführt wird.

Der wenigstens eine Spurrillen-Istwert kann dabei zu definierten Zeitpunkten, zum Beispiel intervallartig beziehungsweise periodisch wiederkehrend, um nur einige Beispiele zu nennen, für eine vorgegebene Zeitdauer und/oder entlang einer vorgegebenen Wegstrecke der Fahrspur erfasst beziehungsweise ermittelt und anschließend mit dem jeweils zugeordneten Spurrillen-Sollwert verglichen werden. Mit einer derartigen Vorgabe von intervallartigen Erfassungszeitpunkten der Spurrillenbeschaffenheit lässt sich ein vernünftiges Maß hinsichtlich des Einsatzes dieses Regelungsmoduls vorgeben, was zu einer deutlich verbesserten Regelgüte des Querführungssystems führt. Grundsätzlich besteht jedoch auch die Möglichkeit, den wenigstens einen Spurrillen-Istwert in der zuvor dargestellten Weise kontinuierlich und dauerhaft zu erfassen beziehungsweise zu ermitteln.

Falls die Soll-Trajektorie spurrillenangepasst verändert werden soll, findet dabei regelmäßig und bevorzugt ein Querrichtungsversatz derselben statt.

Das erfindungsgemäße Spurführungssystem zur Durchführung des erfindungsgemäßen Verfahrens weist bevorzugt eine Erfassungseinrichtung zur Erfassung des wenigstens einen Spurrillen-Istwertes auf. Ferner umfasst dieses Spurführungssystem auch eine Vergleichereinrichtung zum Vergleich des wenigstens eines Spurrillen-Istwertes mit einem entsprechend zugeordneten Spurrillen-Sollwert, wobei ferner auch noch eine Einrichtung vorgesehen ist, die zum Beispiel auch Bestandteil der Vergleichereinrichtung sein kann, mittels der die Lage der Soll-Trajektorie in Abhängigkeit vom Ergebnis des Spurrillen-Istwert/Sollwert-Vergleiches gegebenenfalls spurrillenangepasst verändert werden kann. Der wenigstens eine Spurrillen-Sollwert ist bevorzugt in einer Speichereinrichtung abgelegt und die zuvor genannten Einrichtungen, das heißt die Erfassungseinrichtung, die Vergleichereinrichtung sowie die gegebenenfalls vorhandene Trajektorie-Änderungseinrichtung sind bevorzugt Bestandteil oder bilden ein unabhängig von einem herkömmlichen Spurführungssystem aktivierbares oder deaktivierbares Submodul aus. Dies Submodul kann zum Beispiel in einem Nutzfahrzeug von einem Fahrer aktiviert beziehungsweise deaktiviert werden.

Die Erfindung wird nachfolgend anhand einer Zeichnung näher erläutert.

Die einzige Figur zeigt schematisch eine Draufsicht auf einen Fahrbahnabschnitt 1, der zum Beispiel eine Fahrspur einer Autobahn, insbesondere eine rechte Fahrspur einer Autobahn sein kann.
Für den Fall, dass der Fahrbahnabschnitt 1 keine oder nur solche Spurrillen aufweist, die keine Abänderung der Soll-Trajektorie T erfordern, wird das Fahrzeug, zum Beispiel ein Nutzfahrzeug, von dem hier nicht dargestellten Spurführungssystem für eine bestimmte Zeitdauer, die hier durch die Zeitspanne t₀ bis t₁ dargestellt ist, in herkömmlicher Weise spurgeführt. Das heißt, dass die Räder des Fahrzeugs dann vom Spurführungssytem in herkömmlicher Weise entlang der hier einfach-strichliert dargestellten und keine signifikanten Spurrillen aufweisenden Wegstrecke mit einem gleichen Abstand zu der zum Beispiel die Fahrbahnmitte definierenden Soll-Trajektorie T geführt werden.

Kommt es dann ab dem Zeitpunkt t₁ auf dem Fahrbahnabschnitt 1 zum Auftreten von signifikanteren, d.h. tieferen, hier mit durchgezogenen Linien eingezeichneten Spurrillen 2, 3 (die jeweils durch seitliche Begrenzungslinien 2a, 2b beziehungsweise 3a, 3b begrenzt werden), greift das erfindungsgemäße Spurführungssystem ein: konkret heißt dies, dass zum Beispiel mittels einer Sensoreinrichtung des fahrzeugseitigen Spurführungssystems eine in Abhängigkeit von vorgegebenen Schwellwerten signifikante Lenkwinkeländerung und/oder Radrückstellkraft erfasst beziehungsweise ermittelt wird. Anschließend werden diese zum Beispiel ab dem Zeitpunkt t₁ erfassten Lenkwinkel- beziehungsweise Radrückstellparameter als Spurrillen-Istwert(e) einer Vergleichereinrichtung des Spurführungssystems zugeführt, in der diese(r) mit entsprechend zugeordneten Spurrillen-Sollwerten verglichen wird bzw. werden.

Ergibt der Soll-/Istwert-Vergleich, dass der wenigstens eine erfasste Spurrillen-Istwert in einem definierten Maße von dem oder den Vergleichs-Sollwerten abweicht, dann wird hier beispielhaft zum Zeitpunkt t₂ die Soll-Trajektorie so abgeändert, das heißt im vorliegenden Beispielfall seitlich nach rechts versetzt, dass das Fahrzeug nunmehr nicht mehr entlang der an sich durch das Spurführungssystem in herkömmlicher Weise vorgegebenen Trajektorie T, die ab dem Zeitpunkt t₂ nur noch strichliert eingezeichnet ist, bewegt wird, sondern entlang der Trajektorie T' vorwärtsbewegt wird, die so vorgegeben wird, dass die Räder des Fahrzeugs nicht mehr entlang der strichpunktiert eingezeichneten, der Trajektorie T zugeordneten Radspuren 4, 5 geführt werden, sondern innerhalb der Spurrillen 2, 3.

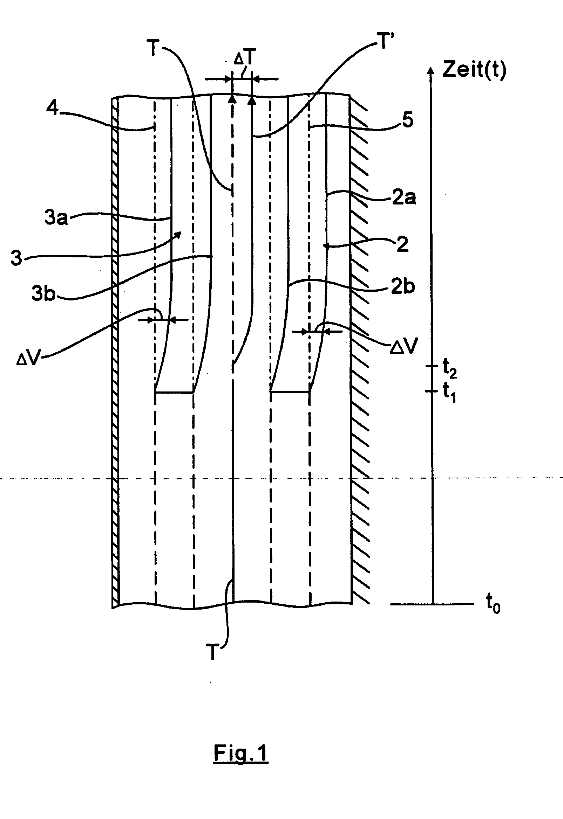

Der Versatz der Trajektorie T' gegenüber der Trajektorie T ist in der Fig. 1 als ΔT eingezeichnet und entspricht dem Versatz der Spurrillen 2, 3 gegenüber den strichpunktiert eingezeichneten Radspuren 4, 5, was in der Fig. 1 schematisch jeweils als ΔV eingezeichnet ist.

Alternativ zur Sensierung der fahrdynamischen Parameter kann, ggf. auch zusätzlich, eine Erfassung der Spurillenform mittels einer bildgebenden Einrichtung, wie z.B. einer Kamera erfolgen. Die einen Versatz der Trajektorie begründende Auswertung der erfassten Spurrillengeometrie kann dabei mittels einer Bildsoftware erfolgen, die Bilddaten vergleicht.

## Patentansprüche

1. Verfahren zur Spurführung eines Fahrzeugs, insbesondere eines Nutzfahrzeuges, das mit einem Spurführungssystem zur aktiven Spurführung ausgerüstet ist, das in Abhängigkeit von erfassten Fahrbahnparametern eine Soll-Trajektorie vorgibt, entlang der das Fahrzeug in einer Fahrspur bewegt wird,
**dadurch gekennzeichnet,**
**dass** das Spurführungssystem für die jeweils vorgegebene Fahrspur wenigstens einen definierten Spurrillenparameter als Spurrillen-Istwert ermittelt und/oder erfasst und mit wenigstens einem vorgegebenen Spurrillen-Sollwert dergestalt vergleicht, dass bei einer definierten Abweichung des Spurrillen-Istwerts vom Spurrillen-Sollwert die Soll-Trajektorie so abgeändert wird, dass die Räder des Fahrzeugs im Wesentlichen innerhalb der Spurrillen (2, 3) der Fahrspur geführt werden.

2. Verfahren nach Anspruch 1, **dadurch gekennzeichnet,**
**dass** das Spurführungssystem wenigstens eine Sensoreinrichtung aufweist, mittels der aktuelle Fahrdynamik- und/oder Fahrwerksparameter als wenigstens ein Spurrillen-Istwert erfasst und mit einem entsprechenden, im Spurführungssystem vorhandenen, insbesondere dort abgelegten, Fahrdynamik- und/oder Fahrwerkparameter-Sollwert als Spurrillen-Sollwert verglichen wird, und
**dass** bei einer ein definiertes Maß überschreitenden Abweichung des oder wenigstens eines Teils der erfassten Spurrillen-Istwerte vom entsprechend zugeordneten Spurrillen-Sollwert die Soll-Trajektorie abgeändert wird.

3. Verfahren nach Anspruch 2, **dadurch gekennzeichnet, dass** als Fahrdynamik-und/oder Fahrwerksparameter Lenkparameter und/oder Radführungsparameter und/oder Bremsparameter und/oder Geschwindigkeitsparameter und/oder Beschleunigungsparameter und/oder das Wankverhalten und/oder das Nickverhalten und/oder das Gierverhalten als Spurrillen-Istwert erfasst und mit entsprechenden Spurrillen-Sollwerten verglichen werden.

4. Verfahren nach Anspruch 3, **dadurch gekennzeichnet, dass** als Spurrillen-Istwert wenigstens der Lenkwinkel und/oder eine Radrückstellkraft erfasst und mit einem entsprechenden Spurrillen-Sollwert verglichen wird.

5. Verfahren nach einem der Ansprüche 1 bis 4, **dadurch gekennzeichnet,**
**dass** der Spurrillenverlauf und/oder die Spurrillenausgestaltung mittels einer Sensor- und/oder Kamera- und/oder Scannereinrichtung erfasst und/oder abgetastet sowie als Spurrillen-Istwert mit einem entsprechenden, im Spurführungssystem vorhandenen, insbesondere dort abgelegten, Spurrillenverlaufs- und/oder Spurrillenausgestaltungs-Sollwert als Spurrillen-Sollwert verglichen wird, und
**dass** bei einer ein definiertes Maß überschreitenden Abweichung des oder wenigstens eines Teils der ermittelten Spurrillen-Istwerte vom entsprechend zugeordneten Spurrillen-Sollwert die Soll-Trajektorie abgeändert wird.

6. Verfahren nach einem der Ansprüche 1 bis 5, **dadurch gekennzeichnet, dass** der wenigstens eine Spurrillen-Istwert zu definierten Zeitpunkten, insbesondere intervallartig und/oder periodisch wiederkehrend, für eine vorgegebene Zeitdauer und/oder entlang einer vorgegebenen Wegstrecke der Fahrspur erfasst und/oder ermittelt und anschließend mit dem jeweils zugeordneten Spurrillen-Sollwert verglichen wird.

7. Verfahren nach einem der Ansprüche 1 bis 6, **dadurch gekennzeichnet, dass** die Soll-Trajektorie bei der Lagekorrektur im Wesentlichen in Querrichtung versetzt wird.

8. Spurführungssystem,
mit einer Erfassungseinrichtung zur Erfassung wenigstens eines Spurrillen-Istwertes,
mit einer Vergleichseinrichtung zum Vergleich des wenigstens einen Spurrillen-Istwerts mit einem entsprechend zugeordneten Spurrillen-Sollwert, und
mit einer Einrichtung, mittels der die Lage der Soll-Trajektorie in Abhängigkeit vom Ergebnis des Spurrillen-Istwert/Sollwert-Vergleiches so spurrillenangepasst veränderbar ist, dass bei einer definierten Abweichung des Spurrillen-Istwerts vom Spurrillen-Sollwert die Soll-Trajektorie so abgeändert wird, dass die Räder des Fahrzeugs im Wesentlichen innerhalb der Spurrillen (2, 3) der Fahrspur geführt werden.

9. Spurführungssystem nach Anspruch 8, **dadurch gekennzeichnet, dass** der wenigstens eine Spurrillen-Sollwert in einer Speichereinrichtung abgelegt ist.

10. Spurführungssystem nach Anspruch 8 oder Anspruch 9, **dadurch gekennzeichnet, dass** die Erfassungseinrichtung, die Vergleichereinrichtung und die Trajektoren-Änderungseinrichtung Bestandteil eines unabhängig von einem herkömmlichen Spurführungssystem aktivierbaren oder deaktivierbaren Submoduls sind.

## Claims

1. Method for lane guidance of a vehicle, particularly of a commercial vehicle, which is equipped with a lane guidance system for active lane guidance which takes captured carriageway parameters as a basis for prescribing a target trajectory along which the vehicle is moved in a lane,
**characterized in that** the lane guidance system ascertains and/or captures at least one defined lane groove parameter for the respectively prescribed lane as a lane groove actual value and compares it with at least one prescribed lane groove target value such that a defined deviation in the lane groove actual value from the lane groove target value prompts the target trajectory to be modified such that the wheels of the vehicle are guided essentially within the lane grooves (2, 3) of the lane.

2. Method according to Claim 1, **characterized in that** the lane guidance system has at least one sensor device which is used to capture current driving-dynamics and/or chassis parameters as at least one lane groove actual value and to compare them with an appropriate driving-dynamics and/or chassis parameter target value which is present in the lane guidance system, in particular stored therein, as a lane groove target value, and
**in that** a deviation in the or at least a portion of the captured lane groove actual values from the correspondingly associated lane groove target value that exceeds a defined measure prompts the target trajectory to be modified.

3. Method according to Claim 2, **characterized in that** the driving-dynamics and/or chassis parameters captured and compared with appropriate lane groove target values are steering parameters and/or wheel guidance parameters and/or braking parameters and/or speed parameters and/or acceleration parameters and/or the roll behaviour and/or the pitch behaviour and/or the yaw behaviour as a lane groove actual value.

4. Method according to Claim 3, **characterized in that** the lane groove actual value captured and compared with an appropriate lane groove target value is at least the steering angle and/or a wheel restoring force.

5. Method according to one of Claims 1 to 4, **characterized in that** the lane groove profile and/or the lane groove embodiment is captured and/or scanned by means of a sensor and/or camera and/or scanner device and, as a lane groove actual value, is compared with an appropriate lane-groove-profile and/or lane-groove-embodiment target value which is present in the lane guidance system, in particular stored therein, as a lane groove target value, and
**in that** a deviation in the or at least a portion of the ascertained lane groove actual values from the correspondingly associated lane groove target value that exceeds a defined measure prompts the target trajectory to be modified.

6. Method according to one of Claims 1 to 5, **characterized in that** the at least one lane groove actual value is captured and/or ascertained at defined times, particularly at intervals and/or with periodic recurrence, for a prescribed period of time and/or along a prescribed section of the lane and is then compared with the respectively associated lane groove target value.

7. Method according to one of Claims 1 to 6, **characterized in that** the target trajectory is displaced essentially in a transverse direction during the position correction.

8. Lane guidance system,
having a capture device for capturing at least one lane groove actual value, having a comparison device for comparing the at least one lane groove actual value with a correspondingly associated lane groove target value, and
having a device which can be used to alter the position of the target trajectory on the basis of the result of the lane groove actual value/target value comparison in a manner matched to the lane grooves such that a defined deviation in the lane groove actual value from the lane groove target value prompts the target trajectory to be modified such that the wheels of the vehicle are guided essentially within the lane grooves (2, 3) of the lane.

9. Lane guidance system according to Claim 8, **characterized in that** the at least one lane groove target value is stored in a memory device.

10. Lane guidance system according to Claim 8 or claim 9, **characterized in that** the capture device, the comparison device and the trajectory changing device are part of a submodule which can be activated or deactivated independently of a conventional lane guidance system.

## Revendications

1. Procédé de guidage sur voie d'un véhicule, notamment d'un véhicule utilitaire, qui est équipé d'un système de guidage sur voie pour le guidage actif sur voie, lequel prédéfinit, en fonction de paramètres détectés de la bande de circulation, une trajectoire de consigne le long de laquelle le véhicule est déplacé dans une voie de circulation,
**caractérisé en ce**
**que** le système de guidage sur voie détermine et/ou Capte pour la voie de circulation respectivement prédéfinie au moins un paramètre d'ornière défini en tant que valeur réelle d'ornière et le compare avec au moins une valeur de consigne d'ornière prédéfinie de telle sorte qu'en présence d'un écart défini entre la valeur réelle d'ornière et la valeur de consigne d'ornière, la trajectoire de consigne est modifiée de telle sorte que les roues du véhicule sont guidées pour l'essentiel à l'intérieur des ornières (2, 3) de la voie de circulation.

2. Procédé selon la revendication 1, **caractérisé en ce que** le système de guidage sur voie présente au moins un dispositif à capteur au moyen duquel est capté le paramètre actuel de dynamique de conduite et/ou de mécanisme de déplacement en tant qu'au moins une valeur réelle d'ornière puis comparé avec une valeur de consigne correspondante d'un paramètre de dynamique de conduite et/ou de mécanisme de déplacement en tant que valeur de consigne d'ornière, présente dans le système de guidage sur voie, notamment stockée dans celui-ci, et
qu'en présence d'un écart qui dépasse une valeur définie entre la valeur réelle d'ornière ou au moins une partie des valeurs réelles d'ornière captées et la valeur de consigne d'ornière associée correspondante, la trajectoire de consigne est modifiée.

3. Procédé selon la revendication 2, **caractérisé en ce que** les paramètres de dynamique de conduite et/ou de mécanisme de déplacement captés en tant que valeur réelle d'ornière sont des paramètres de direction et/ou des paramètres de guidage des roues et/ou des paramètres de freinage et/ou des paramètres de vitesse et/ou des paramètres d'accélération et/ou le comportement vacillant et/ou le comportement de tangage et/ou le comportement de lacet et sont comparés avec les valeurs de consigne d'ornière correspondantes.

4. Procédé selon la revendication 3, **caractérisé en ce que** la valeur réelle d'ornière captée est au moins l'angle de direction et/ou une force de rappel des roues et comparée avec une valeur de consigne d'ornière correspondante.

5. Procédé selon l'une des revendications 1 à 4, **caractérisé en ce que** le tracé de l'ornière et/ou l'agencement de l'ornière est capté et/ou balayé au moyen d'un dispositif à capteur et/ou à caméra et/ou à scanner et aussi comparé en tant que valeur réelle d'ornière avec une valeur de consigne de tracé d'ornière et/ou d'agencement d'ornière correspondante en tant que valeur de consigne d'ornière, présente dans le système de guidage sur voie, notamment stockée dans celui-ci, et
qu'en présence d'un écart qui dépasse une valeur définie entre la valeur réelle d'ornière ou au moins une partie des valeurs réelles d'ornière déterminées et la valeur de consigne d'ornière associée correspondante, la trajectoire de consigne est modifiée.

6. Procédé selon l'une des revendications 1 à 5, **caractérisé en ce que** l'au moins une valeur réelle d'ornière est captée et/ou déterminée à des instants définis, notamment de type intervalles et/ou à répétition périodique, pendant une durée prédéfinie et/ou le long d'un parcours prédéfini de la voie de circulation et ensuite comparée avec la valeur de consigne d'ornière associée respectivement.

7. Procédé selon l'une des revendications 1 à 6, **caractérisé en ce que** la trajectoire de consigne est décalée pour l'essentiel dans le sens transversal lors de la correction de position.

8. Système de guidage sur voie
comprenant un dispositif de captage pour capter au moins une valeur réelle d'ornière,
comprenant un dispositif de comparaison pour comparer l'au moins une valeur réelle d'ornière avec une valeur de consigne d'ornière associée correspondante,
et
comprenant un dispositif au moyen duquel la position de la trajectoire de consigne peut être modifiée par adaptation à l'ornière en fonction du résultat de la comparaison valeur réelle / valeur de consigne d'ornière de telle sorte qu'en présence d'un écart défini entre la valeur réelle d'ornière et la valeur de consigne d'ornière, la trajectoire de consigne est modifiée de telle sorte que les roues du véhicule sont guidées pour l'essentiel à l'intérieur des ornières (2, 3) de la voie de circulation.

9. Système de guidage sur voie selon la revendication 8, **caractérisé en ce que** l'au moins une valeur de consigne d'ornière est stockée dans un dispositif à mémoire.

10. Système de guidage sur voie selon la revendication 8 ou la revendication 9, **caractérisé en ce que** le dispositif de captage, le dispositif de comparaison et le dispositif de modification de trajectoire sont les composants d'un module secondaire activable ou désactivable indépendamment d'un système de guidage sur voie traditionnel.
